# EUROPEAN PATENT APPLICATION

(11) **EP 1 480 455 A1**
(43) Date of publication of application: **24.11.2004**
(21) Application number: 04018854.2
(22) Date of filing: 01.09.1999
(51) Int. Cl.: H04N 5/913

(54) **Method and apparatus of synthesizing copy protection signals in a video signal**

(30) Priority: 02.09.1998 US 98804 P
(62) Divisional of application: 99944032.4
(71) Applicant: Macrovision Corporation, Santa Clara, CA 95050 (US)
(72) Inventor: Quan, Ronald, Cupertino, CA 95014 (US); Brill, Gerow D., New Freedom, PA 17349 (US)
(74) Representative: Needle, Jacqueline

(57) **Abstract**

A method and apparatus for synthesizing copy protection signal is disclosed. Various embodiments are disclosed for dynamically varying the sync or pseudo sync and AGC pulse separation by applying a modulation of position shifting, trimming and/or narrowing techniques over selected time periods to cycle from the copy protection condition to the copy protection defeat condition and back to the copy protection condition. Apparatus for synthesizing the copy protection signals uses timing circuitry (80-96) to identify video lines to contain the copy protection signals and the location in those video lines of those copy protection signals. There is a circuit (98-102) which is arranged to generate modulated inverted pseudo sync pulses and to generate AGC pulses which vary in width and are delayed in position relative to the modulated inverted pseudo sync pulses. The generated modulated pulses are then added to the video signal by summing amplifiers (104, 106).

## Description

The present invention relates to a method of synthesizing copy protection signals in a video signal and to an apparatus for providing copy protection signals.

The movie industry is very concerned about the unauthorized copying of movies and programs. US-A-4,631,603 ('603) discloses the protection of a video signal such that the copy protected video is viewable on a TV set but a recording produced therefrom lacks entertainment value. Thus, the recorded video programs suffer from artifacts ranging from low contrast to synchronizing problems. '603 describes a method causing misoperation of the AGC system in a video cassette recorder while not causing a black depression problem in a television receiver displaying the copy protected signal.

Polish patent application PL 304477 discloses a variation of this earlier method.

US patents 4,965,901, 4,336,554, 5,157,510, 5,194,965, 5,583,936, 5,748,733 and 5,661,801 all describe methods of attenuating, blanking, narrowing, level shifting, modifying and/or clipping the copy protection pulses to defeat the copy protection process.

US-A-5,157,510 describes a method and apparatus for disabling the effect of copy-protect signals by narrowing the pulses whereby the frequency content of the pseudo sync pulses and/or the AGC pulses is increased.

The present invention seeks to provide an alternative method of synthesizing copy protection signals.

According to a first aspect of the present invention there is provided a method of synthesizing copy protection signals in a video signal employing sync or pseudo sync pulses followed by AGC pulses, the method comprising providing dynamically varying copy protection by performing over time one or more of:
dynamically modulating the position of the sync or pseudo sync pulses relative to the AGC pulses or vice versa,
dynamically narrowing or changing the pulse width of the AGC pulses and/or of the sync pulses and/or of the pseudo sync pulses,
dynamically amplitude modulating the AGC pulses, sync pulses or pseudo sync pulses, and
dynamically modulating the width of a gap between the trailing edge of sync or pseudo sync pulses and the leading edge of a respective AGC pulse,
whereby the copy protection is dynamically varied from full copy protection to defeated copy protection.

In an embodiment, dynamically narrowing or changing the pulse width comprises varying from a generally normal pulse width to a narrowed pulse width and back to a generally normal pulse width.

Preferably, the width of the gap is dynamically modulated by dynamically varying the pulse width of the AGC pulses and/or of the sync or pseudo sync pulses.

Preferably, the pulse widths of the AGC pulses and/or of the sync or pseudo sync pulses are dynamically narrowed from 100 percent to about 50 percent and back to 100 percent.

In an embodiment, the AGC pulses are raised back porch AGC pulses, and the method comprises dynamically modulating the position and/or the width of the raised back porch AGC pulses over time from minimum to maximum separation and back to minimum separation with respect to sync or pseudo sync pulses.

In a method of the invention, the AGC pulses are raised back porch AGC pulses, and the method further comprises dynamically amplitude modulating the raised back porch AGC pulses.

In an embodiment, a method of the invention comprises dynamically pulse width and/or position modulating the sync, pseudo sync and/or AGC pulses; and dynamically amplitude modulating the pulse width and/or postion modulated pulses.

The present invention also extends to a method of synthesizing a dynamic copy protection signal in a video signal employing sync, pseudo sync and/or respective AGC pulses, wherein the sync or pseudo sync pulses have a small position separation from respective AGC pulses consistent with maintaining copy protection, comprising:
dynamically modulating the sync, pseudo sync and/or respective AGC pulses back and forth over time, with substantially no change in the position separation between the sync or pseudo sync and/or respective AGC pulses, to dynamically maintain and reduce the copy protection effect over said time.

It will be appreciated that a videocassette system has a limited luminance frequency response, less than 2 MHz. A copy protection signal as described in US-A-4,631,603 recorded on a videocassette duplicating recorder with AGC turned off (to avoid the effects of copy protection) will produce a video signal with pulse shapes modified by the limited frequency response of the duplicating recorder. If there is no gap between the pseudo sync pulses and the AGC pulses, the AGC system of a home duplicating recorder will respond to the combination of the pseudo sync pulses and the AGC pulses.

The limited bandwidth of the recording VCR responds slightly differently to the combination of pseudo-sync and AGC pulses separated by a time gap of 0.5 µseconds to 2.0 µseconds. If the time gap is as low as 0.5 µseconds, the limited bandwidth of the recording videocassette recorder distorts the time gap to effectively remove it and the effectiveness of the copy protection is essentially the same. As the gap widens, the effectiveness of the copy protection is reduced or removed.

By varying the gap via position modulation of the pseudo sync pulses relative to the AGC pulses or vice versa, or dynamically narrowing or changing the pulse width of the added AGC pulses and/or sync or pseudo sync pulses, an easier copy protection implementation is possible which can be used in either the analog or the digital domain. It will be appreciated that cable systems and digital versatile disc players, for example, are generally digital. The range of pulse widths can be, for example, between 50 percent to 100 percent of the normal pulse widths. The pseudo sync pulse normal widths are about 2.3 µseconds and the AGC normal widths are about 2.3 µseconds to 3 µseconds depending on how many added pulses are in a television (TV) line.

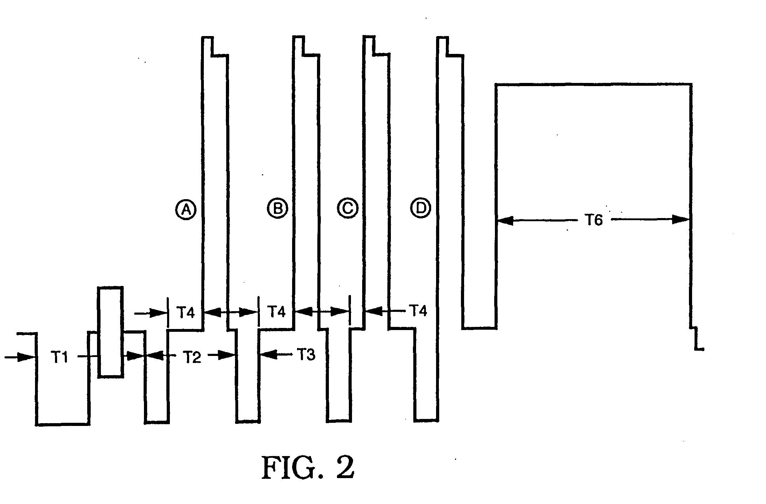

In general a copy protection process of the invention may have added pulse pairs as, for example, in Figure 2(a) of '603, where the AGC pulses and/or pseudo sync pulses are position separated relative to time. If the gap due to position separation is insufficient to "turn off" the copy protection process, that is, the position modulation amounts to only 1.0 µseconds of gap, then the AGC pulses and/or pseudo sync pulses can be narrowed as a function of time to increase the gap sufficiently, that is, to slowly trim or narrow the AGC pulses and/or pseudo sync pulses by about 0.35 µseconds each. This would add another 0.7 µseconds to the 1.0 µseconds gap for an increased gap duration of 1.7 µseconds. After the gap has been extended so as to defeat or turn off the copy protection signal, the new copy protection signal is reactivated by reducing the separation, (for example, to zero), between the AGC pulses and the pseudo sync pulses and by restoring the pulse widths of the trimmed or narrowed AGC pulses and/or pseudo sync pulse to their full normal pulse widths.

Using relative position modulation between the sync and AGC pulses for synthesizing a copy protection signal can be applied to the copy protection pulses within or around a horizontal blanking interval. The method can also be combined with narrowing any portion of the added pulses.

In order to produce a further effective copy protection signal, the AGC pulses may also be amplitude modulated from full amplitude to zero and vice versa over the period of, for example, about 20 to 30 seconds. As a result, the illegal copy will have constantly changing brightness levels. This causes more annoyance when compared to a constant dim picture where the AGC pulses are static and at full amplitude.

According to a further aspect of the present invention there is provided apparatus for providing copy protection signals in a video signal employing sync and pseudo sync pulses followed by AGC pulses, comprising:
timing circuitry for providing timing signals indicative of video lines which are to contain the copy protection signals, and of the location in the video lines of selected copy protection signals;
circuit means responsive to the timing circuitry for generating modulated inverted pseudo sync pulses, and for generating AGC pulses that vary in width and position delay in response to the modulated inverted pseudo sync pulses; and
summing means receiving the video signal and responsive to the circuit means and the timing circuitry for adding to the video signal a dynamic copy protection signal formed of position modulated AGC pulses relative to the pseudo sync pulses.

Embodiments of the present invention will hereinafter be described, by way of example, with reference to the accompanying drawings, in which:

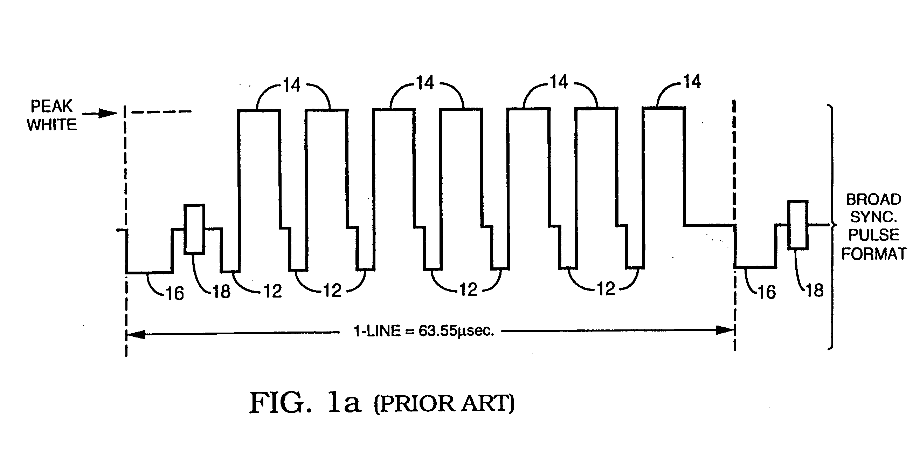

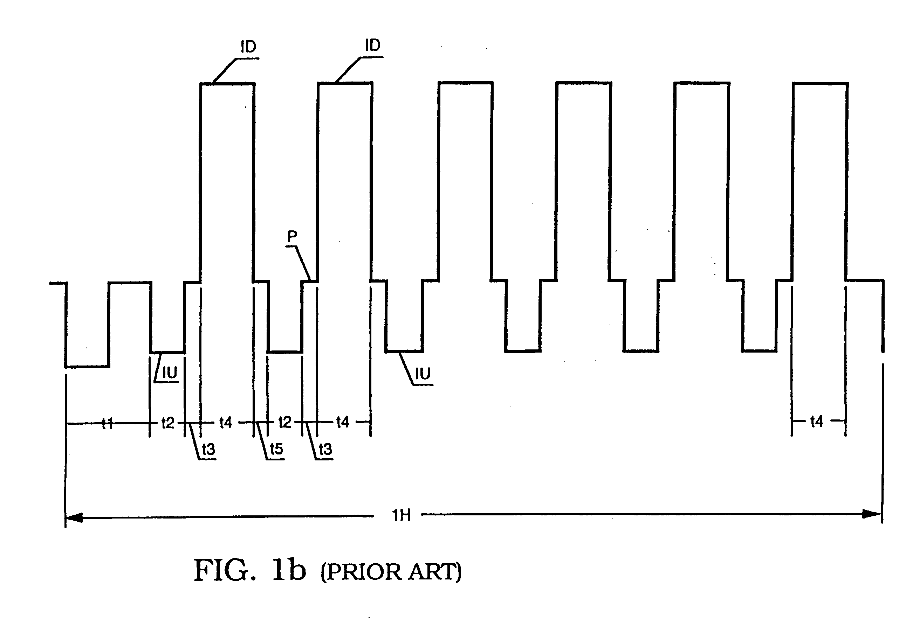

Figure 1 a illustrates a basic anticopy process consisting of AGC and pseudo sync pulses;
Figure 1 b illustrates a modification to the basic anticopy process consisting of AGC and pseudo sync pulses;
Figure 2 illustrates various ways to position shift the AGC pulse to defeat the copy protection signal, and also shows dynamically shifting the position of the AGC pulse;
Figure 3 illustrates a combination of position shifting and narrowing (trimming) of AGC pulses to defeat the copy protection signal;
Figure 4 illustrates various ways to shift the relative position between AGC pulses and pseudo sync pulses whilst narrowing pseudo sync and/or AGC pulses to defeat the copy protection signal;
Figure 5 illustrates a block diagram of an apparatus for defeating a copy protection signal by delaying the AGC pulses;
Figures 5a to 5e illustrate the waveforms generated at various points in a circuit of Figure 5;
Figure 6 illustrates an apparatus for defeating a copy protection process by inserting a time gap between the pseudo sync pulses and the AGC pulses;
Figure 6a to 6e illustrate several waveforms related or generated by the circuit of Figure 6 given typical copy protection signals as an input;
Figure 7 illustrates an embodiment of copy protection apparatus arranged to generate a dynamically variable time gap between the trailing edge of pseudo sync pulses and the leading edge of AGC pulses;
Figures 7a to 7e illustrate the relevant waveforms that are generated at various points in the circuit of Figure 7;
Figures 8a and 8b illustrate position delay or modulation of raised back porches to be used as a copy protection signal;
Figure 9a illustrates a prior art copy protection signal, Figure 9b illustrates a defeating or modifying method in which at least portions of the pseudo sync and/or AGC pulses are reversed, and Figure 9c illustrates another method for defeating or modifying the original process by phase shifting portions of the pseudo syncs and/or AGC pulses;
Figure 10 is a block diagram illustrating a circuit for reversing at least portions of the pseudo sync and/or AGC pulses by way of a memory circuit; and
Figure 11 is a block diagram illustrating a circuit for inverting or phase shifting portions of the pseudo syncs and/or AGC pulses by way of an inverting or phase shifting amplifier.

Figures 1a and 1b illustrate prior art copy protection signals as shown in US-A-4,631,602 and PL 304477 respectively.

Figure 2 illustrates various waveforms showing how AGC pulses can be delayed to provide copy protection defeating techniques. First, the waveform D in Figure 2 illustrates the AGC pulse and pseudo sync pulse at the normal position previously shown in Figure 1a which causes copy protection. Waveforms A to C show various delays or gaps between the trailing edge of pseudo sync pulse and the leading edge of the respective AGC pulse. Waveforms A and B are effective in turning off the copy protection signal while waveform C causes partial reduction or turn off of the copy protection signal. It follows that waveforms A and B are the most effective at defeating the copy protection signal.

Copy protection signals of the invention are dynamically varied from on to off. One technique of the invention starts, for example, with several seconds of the waveform D of Figure 2 (copy protection on) then transitions to the waveform C of Figure 2 (copy protection partially on) and then transitions to the waveform B of the Figure 2 (copy protection turned off). The gap, or separation T4, in Figure 2 is preferably continuously or discretely changing from zero to greater than about 1.5 µseconds. Waveform A is used to turn copy protection off.

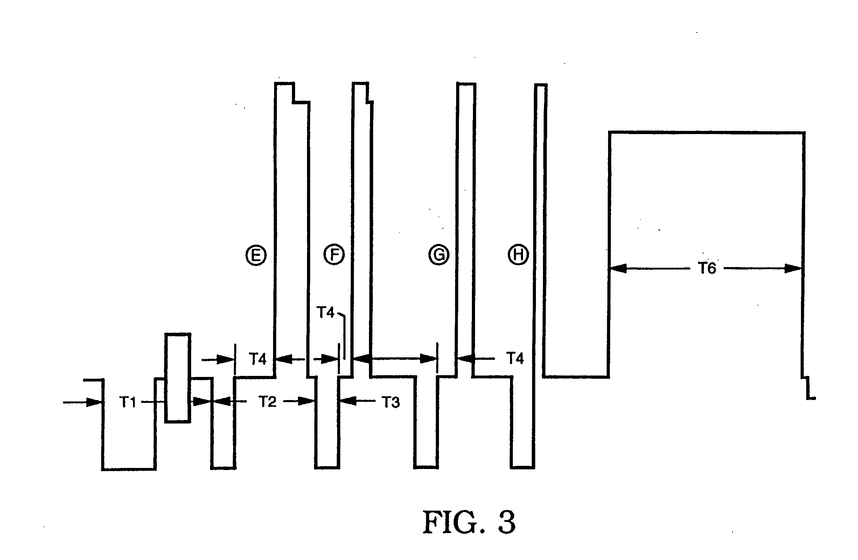

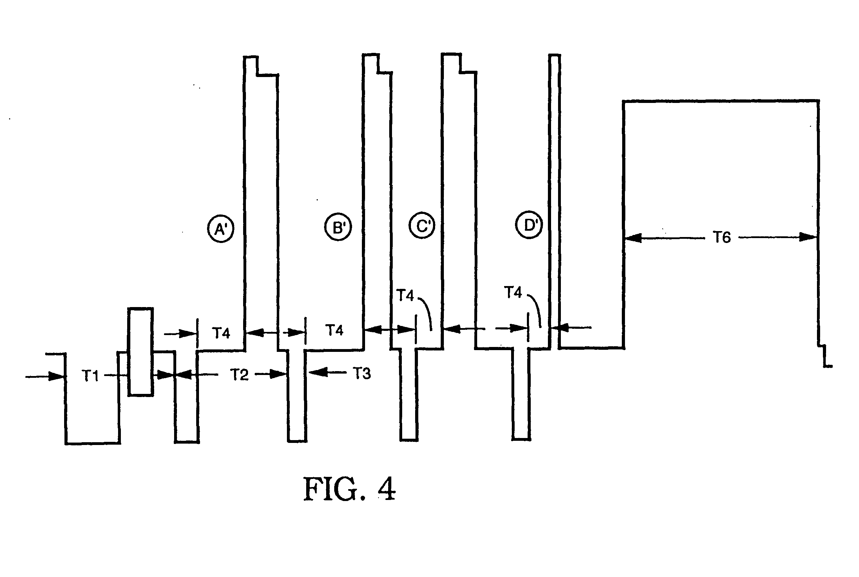

In Figure 2, as well as in Figures 3 and 4, the time interval T1 defines the normal sync to the first pseudo sync pulse period, T2 defines the repetition rate of added pseudo sync pulses, T3 defines the pseudo sync pulses' width and T4 defines the gap duration. T6 designates the width of a white reference pulse which may be included as an option.

Figure 3 illustrates a variation of the embodiment of Figure 2 with AGC pulse narrowing, although the pseudo sync pulses can be narrowed as well. In the waveform H of Figure 3, the pulse resembles a narrowed AGC pulse as in US patents 5,157,510 and 5,194,965. Waveform H of Figure 3 can be used as part of a copy protection signal. The waveform D of Figure 2 represents a normal copy protection signal which can transition to the waveform H of Figure 3, a signal with a narrowed AGC pulse, and then transition to waveform F of Figure 3, a signal with a gap and narrowed AGC pulse. Finally the copy protection signal can be turned off by a transition to the waveform G of Figure 3, where the gap is larger with a narrowed AGC pulse. Waveform E of Figure 3 is equivalent to waveform A of Figure 2 and is used to defeat copy protection.

Figure 4 illustrates pseudo sync pulse narrowing combined with position delay or modulation of varying pulse widths of the AGC pulses to form a dynamic copy protection signal.

In waveform D' of Figure 4, the pseudo sync pulse's trailing edge is advanced to provide a narrowed pseudo sync pulse followed by a delayed AGC pulse leading edge to provide a narrowed AGC pulse. The waveform C' of Figure 4 illustrates a further gap increase in duration between the AGC pulse by position delaying the AGC pulse using an advanced trailing edge to narrow the pseudo sync pulse. The waveform B' of Figure 4 illustrates a combination of position separation between the AGC pulse and the pseudo sync pulse with narrowed AGC and pseudo sync pulses. As may be seen, waveform A' is generally the equivalent of waveforms A and E of Figures 2 and 3, respectively.

By employing narrowed pseudo sync pulses and/or AGC pulses that are varied in width, Figure 4 provides a dynamic copy protection signal based on dynamically changing the gap (separation) and the amount of narrowing on pseudo sync pulses and/or AGC pulses. For example, the embodiment may start with a waveform D as illustrated in Figure 2 to provide the copy protection process, then provide narrowing of the AGC pulses and/or pseudo sync pulses to achieve partial copy protection via the waveform C' in Figure 4, and then transition to a signal such as waveform B' in Figure 4 to turn off the copy protection. The embodiment then reverses the cycle from waveforms B', to C' and back to D to restore the copy protection.

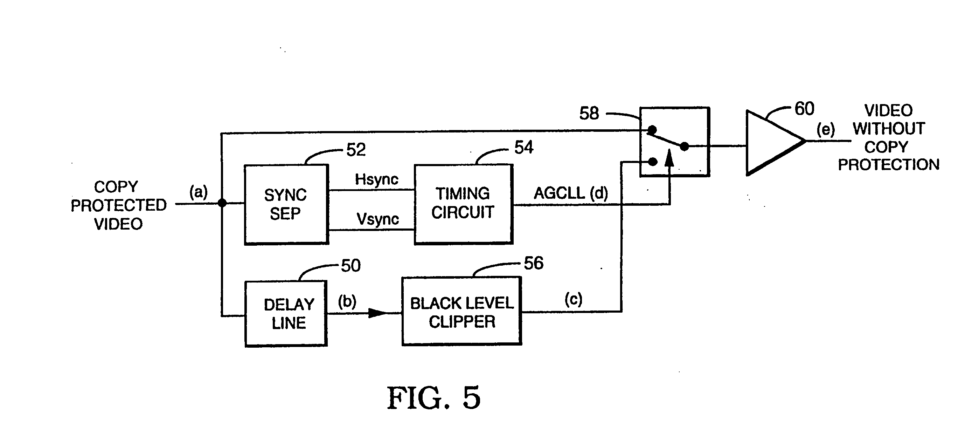

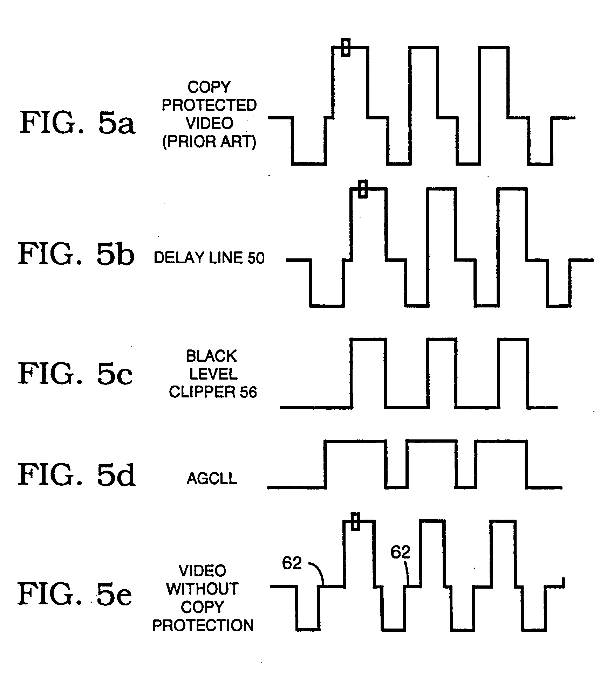

Figure 5 is a block diagram depicting an example of circuitry for defeating copy protection pulses by delaying the AGC pulses relative to the pseudo sync pulses. To this end, copy protected video is inputted as at (a) to a delay line circuit 50, which delays the input video, and also to a sync separator circuit 52. The output of the sync separator circuit provides horizontal and vertical sync pulses to a timing circuit 54 which in turn outputs pulses at (d) coincident with the video lines containing raised back porch AGC pulses and those with AGC pulses. This output signal, AGCLL, is logic high at least from the leading edge of the AGC pulses of the input video signal to the trailing edge of the AGC pulses which appear at an output (b) of the delay line circuit 50 (delayed input video of about 1.5 µseconds or more). A black clipper circuit 56 coupled to the delay line 50 clips off most or all of the sync pulses. Thus, delayed AGC pulses are supplied at the output (c) of the black clipper circuit. By using an electronic switch 58, with control signal AGCLL to switch in the delayed AGC pulses, the copy protection pulses' effects are then defeated or reduced at the output (e) of an amplifier 60.

Figures 5a through 5e illustrate the waveforms generated at different locations of Figure 5 and are generally self-explanatory. For example, in Figure 5e, the output has a gap, that is, separation 62, corresponding to gap T4 of Figures 2-4, long enough between the sync pulses and AGC pulses to allow recordable copies of the video signal. It should be noted that Figure 5 is just an illustration of an apparatus for producing position delay of AGC pulses to defeat the copy protection signal. It is also possible to design a position delay equivalently by removing substantially the original copy protection signal or parts of it and then regenerating modified pseudo sync pulses and/or AGC pulses. For instance, the incoming copy protection pulses may be removed and then the pseudo sync pulses inserted in advance of the original pseudo sync pulse, with AGC pulses inserted in delayed relation to the original AGC pulses. Thus a gap voltage is produced between the pseudo sync pulses and AGC pulses that allows for a recordable copy.

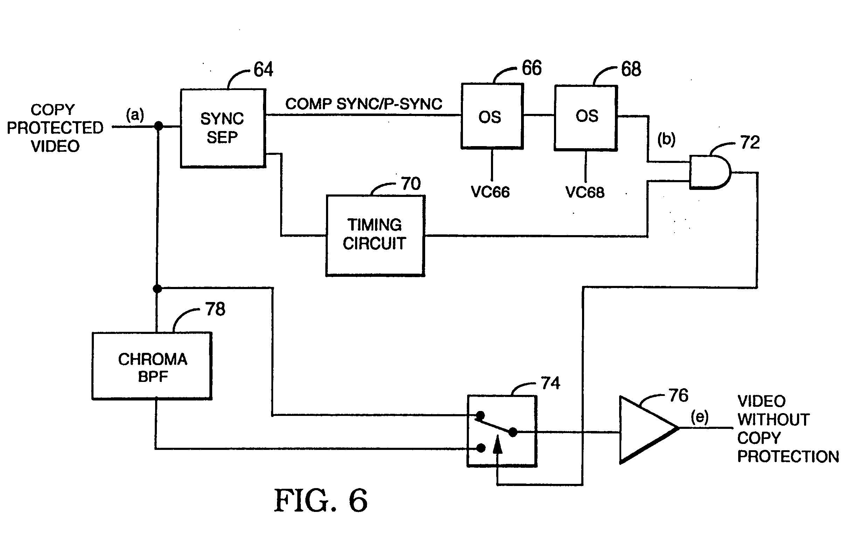

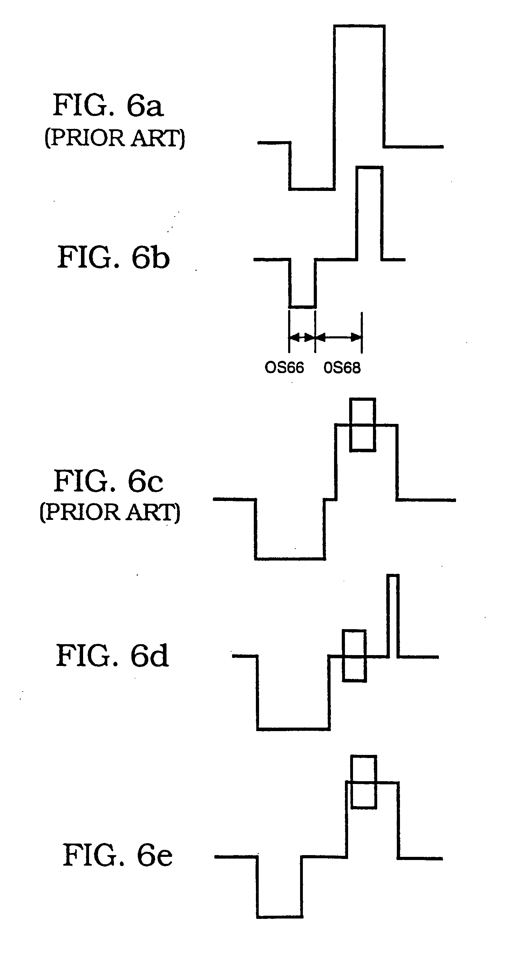

Figure 6 is a block diagram depicting circuitry for creating a time gap around blanking level by advancing the trailing edge of sync and delaying the leading edge of the AGC pulse of the copy protection signal, leading to a recordable copy. Copy protected video is fed at (a) to a sync separator 64 to output composite sync including pseudo sync pulses to a one shot (multivibrator) 66. One shot 66 triggers off the leading edge of sync pulses including pseudo sync pulses, and its pulse width can be controlled via a control voltage VC66. The output (b) of one shot 66 is coupled to another one shot 68 whose pulse width is controlled by another control voltage, VC68. The output (b) of one shot 68 is then a pulse coincident with the latter portion of the sync or pseudo sync pulse and the beginning portion of the AGC pulse of the copy protected input video signal. A sync separator output also is fed to a timing circuit 70 which generates pulses coincident with the copy protection signal within the video lines. The output of the timing circuit 70 and of the one shot 68 are fed to an AND gate 72 to control a switch 74 during the times copy protection pulses are present. The switch 74 receives the copy protected video at (a) and supplies a signal containing a gap voltage between the sync and AGC pulses of copy protection signals, whereby the video signal at an output (e) of an output amplifier 76 allows for a recordable copy. Figure 6 also uses a chroma bandpass filter 78 to generate the gap, but also to reinsert color burst during narrowing of the normal sync and/or raised back porch. As a matter of fact narrowing and/or attenuation and/or level shifting of any kind on the raised back porch AGC pulses and/or its sync signal can result in a recordable copy.

Figures 6a to 6e show the result of this kind of narrowing. Figure 6a represents a typical copy protection signal consisting of pseudo sync pulses and AGC pulses. Figure 6b shows the narrowed pseudo sync pulses and/or AGC pulses with a gap (voltage) in between. Figure 6c shows a horizontal pulse with a raised back porch AGC pulse in typical fashion of a copy protection signal. Figures 6d and 6e show the result of the apparatus for Figure 6 which narrows the raised back porch AGC pulse (Figure 6d) and/or the horizontal sync pulse (Figure 6e) to allow a recordable copy. Note in Figure 6e the color burst is still present even after narrowing, in the area where burst is normally located.

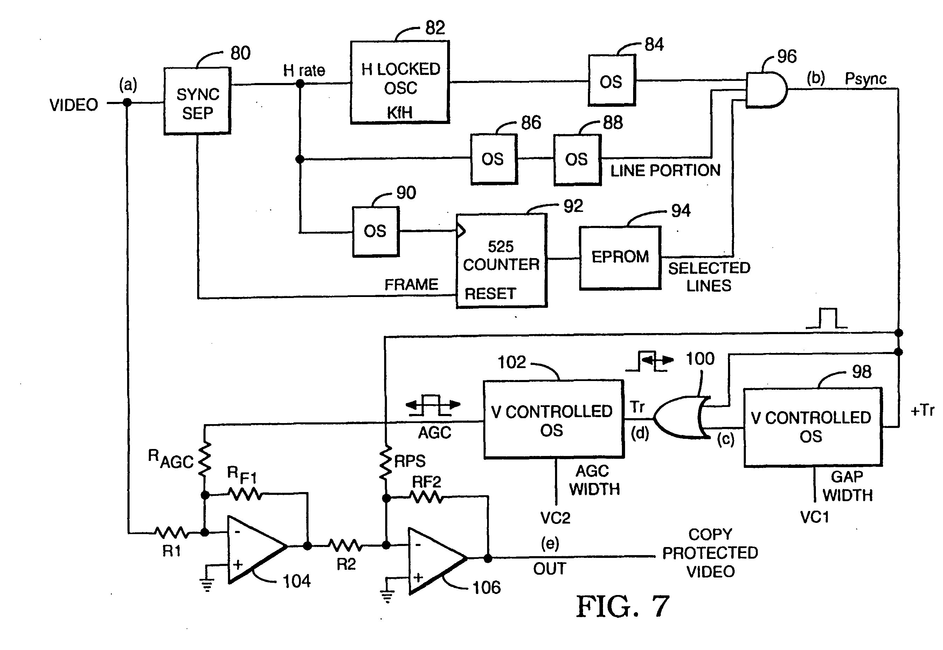

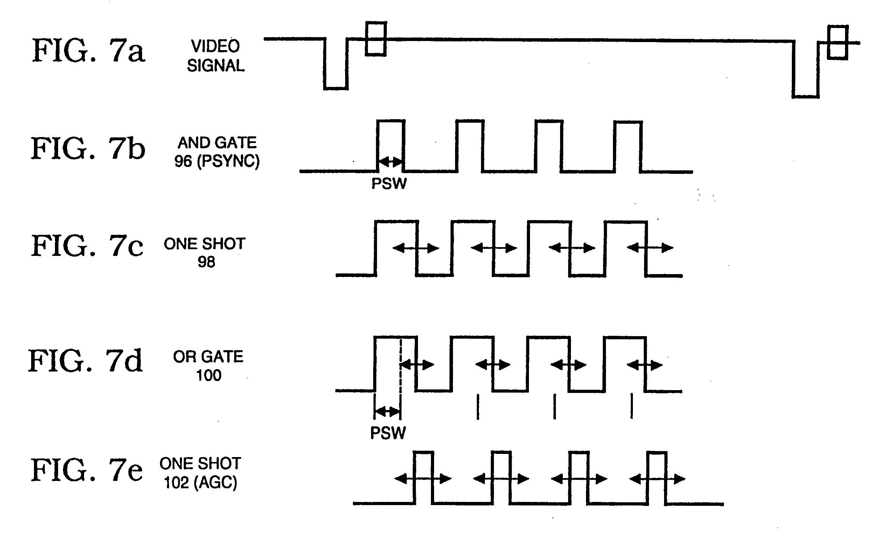

Figure 7 is a block schematic diagram depicting circuitry for generating a copy protection process that mimics the amplitude modulation of AGC pulses by position modulation. Program video with or without copy protection is the input video signal supplied at input (a) to a sync separator 80, which in turn outputs horizontal rate pulses. These horizontal rate pulses are coupled to a horizontal locked (triggered) oscillator 82. The output of this oscillator is preferably but not necessarily locked to the horizontal frequency at a higher frequency (i.e. 4 cycles per half a video line). A one shot (multivibrator) timer circuit 84 defines the positive pulse duration of the horizontal locked oscillator 82. Meanwhile, the sync separator 80 also outputs the horizontal rate pulses to a one shot 86, whose output is coupled to a one shot 88. The latter supplies a gating pulse for the location of pseudo sync pulses in the video line (i.e. 32 µseconds or first half of the video line). The location of the respective video lines that will contain the copy protection pulses is generated by a circuit consisting of a one shot 90, a (525) line counter 92 and an EPROM circuit 94. From the sync separator 80, horizontal pulses are supplied to the one shot 90 whose output is coincident with the beginning of the video line. A frame reset pulse is fed to the 525 line counter 92 (i.e. for NTSC) along with the horizontal rate pulses for the counter's clock. The counter's output is used to address the memory circuit of EPROM 94, which is programmed to output logic high pulses coincident with those video lines that will have the copy protection pulses. The output (b) of an AND gate 96 then comprises "inverted" pseudo sync pulses on selected video lines (i.e., in the vertical blanking interval).

One method for generating position modulated AGC pulses is to induce pulse width modulation on an inverted pseudo sync pulse signal and then trigger off the trailing edge of this pulse width modulated inverted pseudo sync pulse signal to generate AGC pulses. To this end, the output of AND gate 96 triggers a voltage controlled one shot timer 98 on the leading edge of an "inverted" pseudo sync pulse signal. The output (c) of one shot timer 98 is a pulse with a minimum width of the output of AND gate 96, and a maximum pulse width of 1.5 µseconds (or more) than its minimum pulse width. For example, if the output of AND gate 96 has a pulse width of 2.3 µseconds, then the output of one shot timer 98 has pulse widths that vary according to voltage control VC1 from 2.3 µseconds to at least 2.3 µseconds +1.5 µseconds or at least 3.8 µseconds. The output of one shot timer 98 is OR'd by an OR gate 100 with the output of AND gate 96 to ensure that the output (d) of OR gate 100 has a minimum width of the "inverted" pseudo sync pulse from the AND gate. The output of the OR.gate 100 triggers on the trailing edge to output AGC pulses whose widths can be controlled voltage wise via a voltage control VC2 supplied to a voltage controlled one shot timer 102. The output of one shot timer 102 then provides AGC pulses that are varying in delay from the pseudo sync pulses' trailing edge on the order of from zero to at least 1.5 µseconds. The output of one shot timer 102 (AGC pulses) is fed to a summing amplifier 104 along with the input video signal. The output of the inverted pseudo sync pulse from AND gate 96 is negatively summed with the output of amplifier 104 via a (negative) summing amplifier 106. The output (e) of amplifier 106 then has position modulated AGC pulses relative to the pseudo sync pulses and is thus a dynamic copy protection signal.

Note Figure 7 illustrates that the AGC pulses also can be pulse width modulated if the one shot timer 84 is voltage controlled. Figures 7a to 7e show the wave forms generated at various locations (a) - (e) in the circuit of Figure 7.

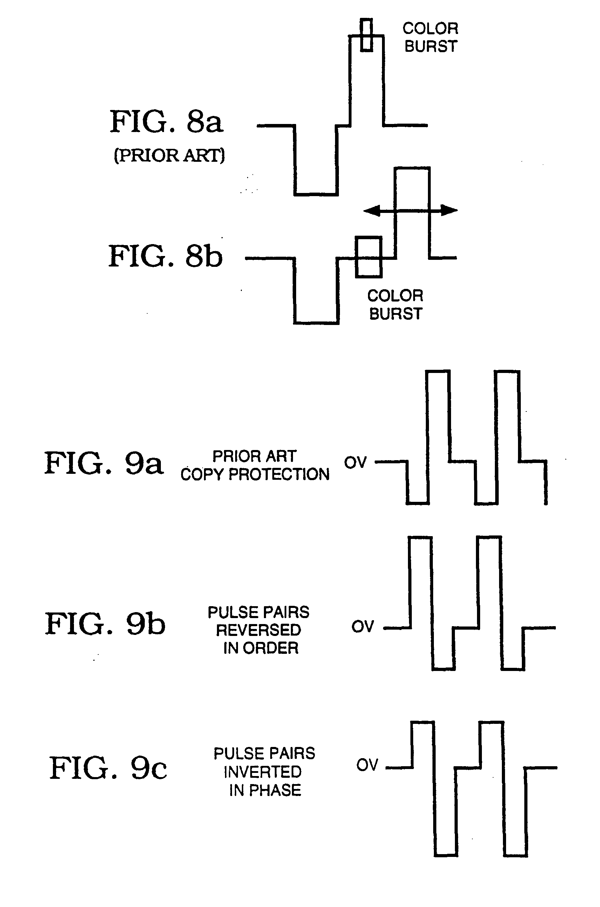

Figures 8a, 8b illustrate that the circuit of Figure 7 can be applied to copy protection pulses with normal sync and raised back porch AGC pulses such as exemplified by Figure 7a. Thus Figure 8b shows a dynamic position modulated copy protection signal that modifies the technique of Figure 3 of Patent 4,819,098. The signal shown in Figure 8b can occur in clusters or in selected video lines.

It should be noted that the copy protection process can have position, pulse width and/or gap width modulation, and/or amplitude modulation, done on individual pseudo sync pulses, horizontal sync pulses, AGC pulses or raised back porch AGC pulses, over time from maximum separation (defeated copy protection) to minimum separation (full copy protection). For instance if there are 40 added pulse pairs of normal pseudo sync pulses and AGC pulses, one can in any combination slowly increase the separation between AGC pulses and pseudo sync pulses in any number of pulse pair(s) at a time or all of them at a time until sufficient pulse pairs of copy protection pulse pairs have maximum separation to turn off copy protection. Additionally, one can in any combination slowly decrease the separation from maximum separation (defeated copy protection) to minimum separation (full copy protection).

As a further example, copy protection signal can be applied throughout the vertical blanking interval and its vicinity, and the copy protection signals can include different amounts of added pulses per video line. In one embodiment for example, a single pseudo sync pulse and/or AGC pulse in a video line can be modulated. As previously mentioned, the AGC or raised back porch AGC pulses also can be amplitude modulated in combination with the above-mentioned processes.

Figure 9a depicts a waveform of a prior art copy protection signal. Figure 9b depicts a waveform of a modifying method for the signal of Figure 9a which reverses the order of at least portions of the pseudo sync and/or AGC pulses. Figure 9c is a waveform of another method to modify the original process (Figure 9a for example) by phase shifting, i.e., inverting, at least portions of the pseudo syncs and/or AGC pulses. In the case of Figure 9c the phase shift is a 180 degree reversal of pseudo syncs and AGC pulses. Note that the methods described for Figures 9b and 9c can be applied to those copy protection pulses around or within the horizontal blanking interval. The methods described for Figures 9b and 9c can be combined with relative attenuation, pulse narrowing, level shifting, and/or position modulation processes.

It is possible to use the techniques described with reference to Figures 9b and 9c to synthesize a copy protection signal. To dynamically turn on and off the copy protection process, the technique starts with a copy protection signal as shown in Figure 9a (copy protection effectively on). The technique continues by slowly reversing the order of the pseudo syncs with the AGC pulses until the (modified) copy protection signal substantially becomes Figure 9b (copy protection effectively off). Similarly, if the technique starts with Figure 9a where the copy protection is fully on, then the copy protection process is slowly turned off by inverting (phase shifting), attenuating, level shifting and/or position modulating the pseudo syncs and/or AGC pulses until the (modified) copy protection signal becomes the signal depicted in Figure 9c.

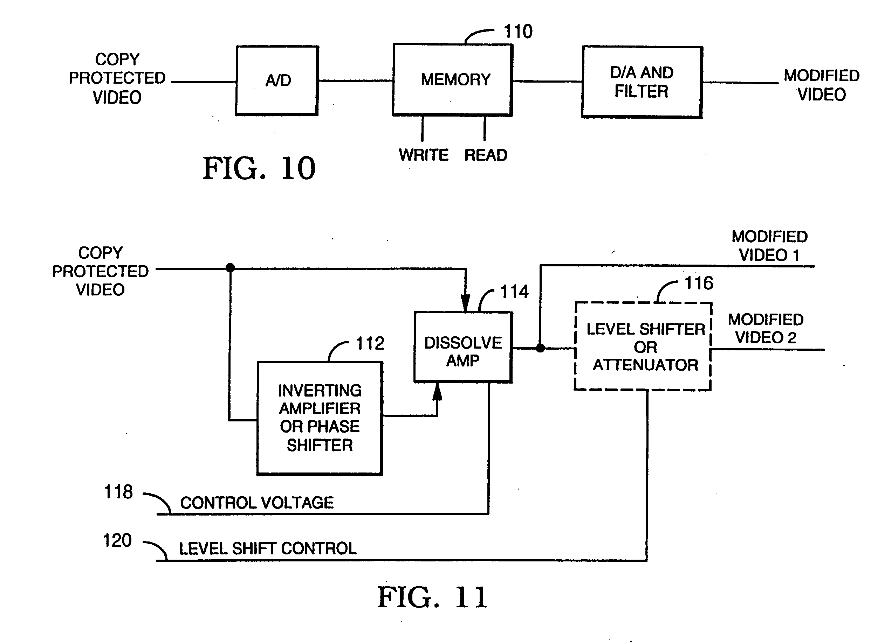

Referring to Figure 10, by using a video memory 110 and/or a regenerating signal, the waveform of Figure 9a can be transformed to that of Figure 9b. In this embodiment, the video memory 110 stores the signal of Figure 9a and the signal is read out of memory in reverse order to achieve the signal of Figure 9b. Thus, the block diagram of Figure 10 is an example of circuitry for implementing the latter signal reversing technique for all or selected portions of the pseudo syncs and/or AGC pulses.

Figure 11 illustrates circuitry for providing the phase shifting technique which transforms the waveform of Figure 9a to that of Figure 9c. To this end, an inverting (or phase shifting) amplifier 112 inverts (phase shifts) the signal of Figure 9a. A video mix dissolve amplifier 114 (or switcher) is used to transform or transition the waveform from that of Figure 9a to that of Figure 9c. The dissolve amplifier 114 is responsive to a control voltage 118. Accordingly, Figure 11 illustrates circuitry for inverting or phase shifting at least portions of the pseudo syncs and/or AGC pulses by way of the inverting or phase shifting amplifier 112 along with the switching or dissolving amplifier 114. An optional level shifting and/or attenuating circuit 116 is also illustrated in Figure 11 in phantom line. The level shifting/attenuating circuit 116 is responsive to a level shift control signal 120.

It will be appreciated that modifications to, and variations in, the embodiments as described and illustrated may be made within the scope of the accompanying claims.

## Claims

1. A method of synthesizing copy protection signals in a video signal employing sync or pseudo sync pulses followed by AGC pulses, the method comprising providing dynamically varying copy protection by performing over time one or more of:
dynamically modulating the position of the sync or pseudo sync pulses relative to the AGC pulses or vice versa,
dynamically narrowing or changing the pulse width of the AGC pulses and/or of the sync pulses and/or of the pseudo sync pulses,
dynamically amplitude modulating the AGC pulses, sync pulses or pseudo sync pulses, and
dynamically modulating the width of a gap between the trailing edge of sync or pseudo sync pulses and the leading edge of a respective AGC pulse,
whereby the copy protection is dynamically varied from full copy protection to defeated copy protection.

2. A method as claimed in Claim 1, wherein dynamically narrowing or changing the pulse width comprises varying from a generally normal pulse width to a narrowed pulse width and back to a generally normal pulse width.

3. A method as claimed in any preceding claim, comprising dynamically modulating the width of the gap by dynamically varying the pulse width of the AGC pulses and/or of the sync or pseudo sync pulses.

4. A method as claimed in any preceding claim, comprising dynamically narrowing the pulse width of the AGC pulses and/or of the sync or pseudo sync pulses from 100 percent to about 50 percent and back to 100 percent.

5. A method as claimed in any preceding claim, wherein the AGC pulses are raised back porch AGC pulses, and comprising dynamically modulating the position and/or the width of the raised back porch AGC pulses over time from minimum to maximum separation and back to minimum separation with respect to sync or pseudo sync pulses.

6. A method as claimed in any preceding claim, wherein the AGC pulses are raised back porch AGC pulses, and comprising dynamically amplitude modulating the raised back porch AGC pulses.

7. A method as claimed in any preceding claim, comprising:
dynamically pulse width and/or position modulating the sync, pseudo sync and/or AGC pulses; and
dynamically amplitude modulating the pulse width and/or position modulated pulses.

8. A method of synthesizing a dynamic copy protection signal in a video signal employing sync, pseudo sync and/or respective AGC pulses, wherein the sync or pseudo sync pulses have a small position separation from respective AGC pulses consistent with maintaining copy protection, comprising:
dynamically modulating the sync, pseudo sync and/or respective AGC pulses back and forth over time, with substantially no change in the position separation between the sync or pseudo sync and/or respective AGC pulses, to dynamically maintain and reduce the copy protection effect over said time.

9. A method as claimed in Claim 8, wherein the step of dynamically modulating comprises dynamically pulse width modulating the sync or pseudo sync and/or respective AGC pulses.

10. A method as claimed in Claim 9, wherein the step of dynamically pulse width modulating comprises:
dynamically modulating the leading edge of the sync or pseudo sync pulses and/or dynamically modulating the trailing edge of the AGC pulses, wherein one or more sync or pseudo sync and/or respective AGC pulses is modulated at a time.

11. A method as claimed in Claim 9, wherein the dynamic pulse width modulation varies from a generally normal pulse width to a narrowed pulse width and back to a generally normal pulse width.

12. A method as claimed in Claim 8, wherein the dynamic modulation is pulse width modulation or pulse width and position modulation.

13. A method as claimed in Claim 8, comprising:
dynamically pulse width and/or position modulating the one or more sync, pseudo sync and/or respective AGC pulses; and
dynamically amplitude modulating one or more selected pulses of the pulse width and/or position modulated pulses.

14. A method as claimed in Claim 8, wherein the step of dynamically modulating comprises:
dynamically amplitude modulating one or more selected pulses of the sync, pseudo sync and/or respective AGC pulses.

15. A method as claimed in any of Claims 1 to 6, wherein one of said pulses is dynamically modulated at a time.

16. A method as claimed in Claim 8, wherein the step of dynamically modulating comprises:
dynamically amplitude modulating a selected one or more of the sync, pseudo sync or respective AGC pulses at a time so as to reduce and then restore the number of the modulated pulses to correspondingly reduce and then restore the copy protection effect over said time.

17. A method as claimed in Claim 8, wherein the step of dynamically modulating comprises:
dynamically narrowing and expanding any portion of the sync, pseudo sync and/or AGC pulses.

18. A method as claimed in Claim 8, wherein the step of dynamically modulating is applied continuously or discretely to dynamically disable and enable the copy protection signals.

19. A method as claimed in Claim 8, including raised back porch AGC pulses wherein the step of dynamically modulating comprises:
dynamically modulating at least one or a selected combination of the position and pulse width, pulse width or amplitude of one or more of selected pulses of the sync, pseudo sync, AGC and/or raised back porch AGC pulses so as to synthesize the copy protection signals.

20. Apparatus for providing copy protection signals in a video signal employing sync and pseudo sync pulses followed by AGC pulses, comprising:
timing circuitry (80-96) for providing timing signals indicative of video lines which are to contain the copy protection signals, and of the location in the video lines of selected copy protection signals;
circuit means (98-102) responsive to the timing circuitry for generating modulated inverted pseudo sync pulses, and for generating AGC pulses that vary in width and position delay in response to the modulated inverted pseudo sync pulses; and
summing means (104, 106) receiving the video signal and responsive to the circuit means and the timing circuitry for adding to the video signal a dynamic copy protection signal formed of position modulated AGC pulses relative to the pseudo sync pulses.

21. Apparatus as claimed in Claim 20, wherein:
the timing circuitry includes sync separating means (80) for providing a horizontal rate (H rate) signal and a frame rate signal;
means (82) responsive to the H rate signal for providing a first signal which defines a positive pulse duration of an H rate related signal;
multivibrator means (84) responsive to the H rate signal for providing a second signal indicative of the location of sync pulses in a video line;
means (90-94) responsive to the H rate and frame rate signals for providing a third signal indicative of the video lines which are to contain the copy protection signals; and
logic means (96) responsive to the first, second and third signals for providing inverted pseudo sync pulses on selected video lines;
the circuit means (98-102) include one shot timer circuit means (98-102) responsive to control voltages for providing said AGC pulses that are varying in width and in position delay; and
the summing means include summing amplifier means (104, 106) receiving the video signal and responsive to said inverted pseudo sync pulses and said width and position delay varying AGC pulses, for providing the position modulated AGC pulses relative to the pseudo sync pulses, resulting in a dynamically varying copy protected video signal.

22. Apparatus as claimed in Claim 21, wherein:
said means for providing the first signal include an H locked oscillator (82);
said means for providing the third signal include a memory means (94) responsive to a line counter (92);
said one shot timer circuit means include a pair of voltage controlled one shot circuits (98, 102); and
said summing amplifier means include first and second summing amplifiers (104, 106) responsive to said width and position delay varying AGC pulses and said inverted pseudo sync pulses, respectively.

23. Apparatus as claimed in Claim 20, wherein:
said circuit means (98-102) generate the AGC pulses as raised back porch AGC pulses; and
said circuit means dynamically position and/or width modulate the raised back porch AGC pulses over time from minimum to maximum separation and back to minimum separation, with respect to the sync or pseudo sync pulses.

24. Apparatus as claimed in Claim 20, wherein:
the copy protection signals include sync, pseudo sync, AGC and/or raised back porch AGC pulses; and
said circuit means cause dynamic position, pulse width and/or gap width modulation of the pulses over time from maximum to minimum gap separation.
